# EUROPÄISCHE PATENTSCHRIFT

(11) **EP 1 898 067 B1**
(45) Veröffentlichungstag und Bekanntmachung des Hinweises auf die Patenterteilung: **27.04.2011**
(21) Anmeldenummer: 07016655.8
(22) Anmeldetag: 24.08.2007
(51) Int. Cl.: F02C 6/08, F04D 27/02, F04D 29/68

(54) **Fluidrückführung im Trennkörper von Strömungsarbeitsmaschinen mit Nebenstromkonfiguration**
Liquid return in baffles of fluid-flow engines with bypass flow configuration
Retour de fluide dans un corps séparé de machines de traitement de flux avec une configuration de flux secondaire

(30) Priorität: 31.08.2006 DE 102006040757
(43) Veröffentlichungstag der Anmeldung: 12.03.2008
(73) Patentinhaber: Rolls-Royce Deutschland Ltd & Co KG, 15827 Blankenfelde-Mahlow (DE)
(72) Erfinder: Gümmer, Volker, 15831 Mahlow (DE)
(74) Vertreter: Weber, Joachim

(56) Entgegenhaltungen:
- EP-A- 1 382 855
- EP-A- 1 659 293
- DE-A1-102005 052 466
- GB-A- 2 406 139
- US-A1- 2005 226 717

## Beschreibung

Die vorliegende Erfindung bezieht sich auf Strömungsarbeitsmaschinen mit Nebenstromkonfiguration, die beispielsweise bei Bläsern, Verdichtern, Pumpen und Ventilatoren axialer und halbaxialer Bauart mit gasförmigem oder flüssigem Arbeitsmedium (Fluid) vorkommen kann. Die Strömungsarbeitsmaschine besteht aus mehreren Stufen. Jede Stufe umfasst einen Rotor und einen Stator. Der Rotor besteht aus einer Anzahl von Schaufeln, die mit der rotierenden Welle der Maschine verbunden sind und Energie an das Arbeitsmedium abgeben.

Der Rotor kann mit oder ohne Deckband am äußeren Schaufelende ausgeführt sein. Der Stator besteht aus einer Anzahl feststehender Schaufeln, die nabenseitig wie gehäuseseitig mit festem oder freiem Schaufelende ausgeführt sein können. Die Rotortrommel und die Beschaufelung sind von einem Gehäuse umgeben. Die Maschine kann einen Stator vor dem ersten Rotor aufweisen (Vorleitrad).

Die Strömungsarbeitsmaschine besitzt eine Nebenstromkonfiguration derart, dass sich der einstromige Ringkanal hinter einer der Schaufelreihen in zwei konzentrische Ringkanäle aufteilt, die ihrerseits mindestens jeweils eine weitere Schaufelreihe beherbergen.

Im Einzelnen betrifft die Erfindung eine Strömungsarbeitsmaschine, die hinter der ersten oder einer weiter stromab befindlichen Stufe eine Verzweigung des Ringkanals (des Strömungspfades) aufweist, an der ein im Wesentlichen konzentrisch angeordneter Trennkörper mit lippenförmiger Vorderkante den Hauptstrom in Kernstrom und Nebenstrom teilt.

Für bestimmte Anwendungen werden Strömungsarbeitsmaschinen derart ausgeführt, dass der geförderte Gesamtfluidstrom nach Passieren einer oder mehrerer Schaufelreihen in zwei kleinere Ströme aufgeteilt und getrennt weitergeführt wird. Diese zwei Ströme werden als Kernstrom (innen) und Nebenstrom (außen) bezeichnet.

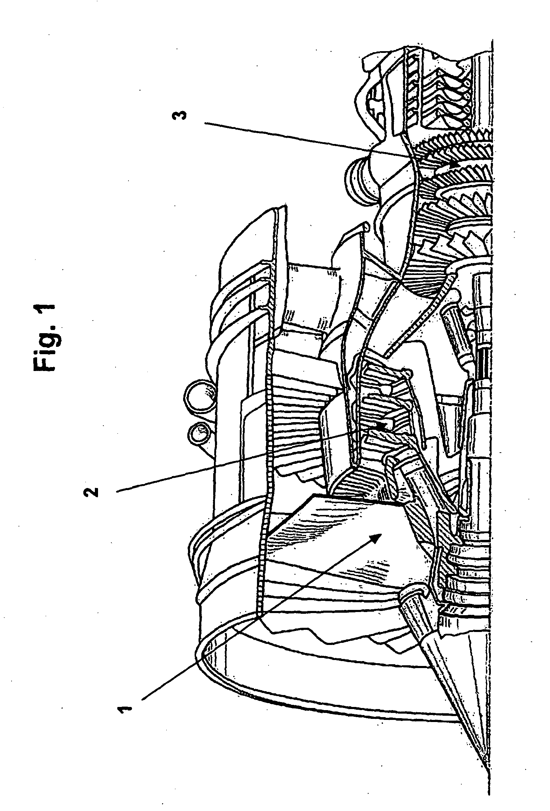

Die Fig. 1 zeigt beispielhaft das Niederdruckverdichtersystem eines heutigen zivilen Zweiwellentriebwerks. Die Aufteilung des Massenstroms geschieht üblicherweise im Niederdruckverdichterabschnitt hinter dem Rotor oder Stator der letzten Fanstufe. Der Fan kann einstufig oder auch mehrstufig ausgeführt sein.

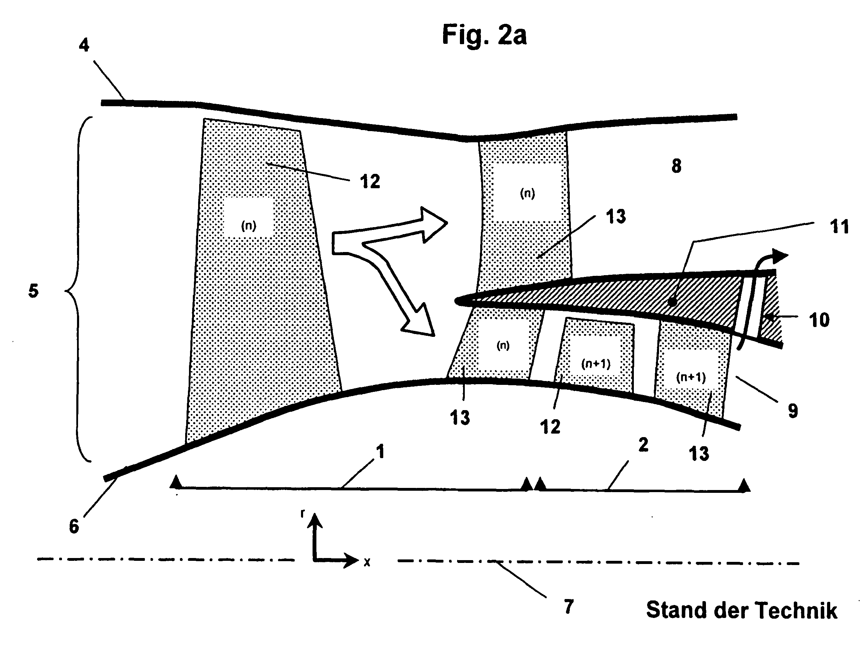

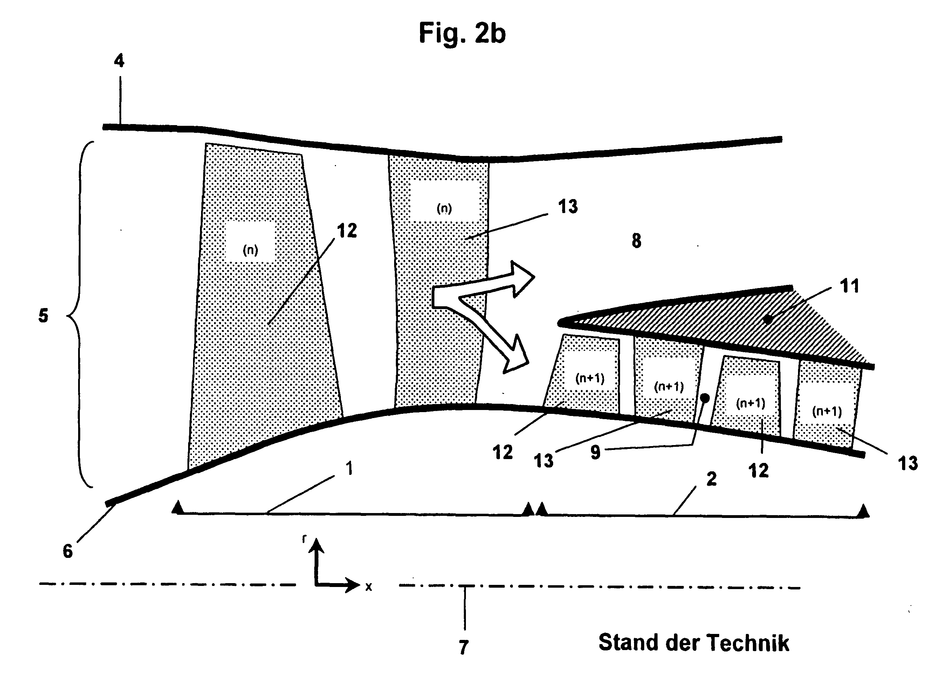

Fig. 2a und Fig. 2b zeigen zwei typische Nebenstromkonfigurationen am Beispiel des Niederdruckverdichterabschnitts eines Zweiwellentriebwerks höherer Schubklasse. Kennzeichnend dafür ist, dass der Niederdruckverdichterabschnitt unmittelbar hinter dem zugehörigen Kernstromstator eine oder mehrere Boosterstufen aufweist.

Ein im Wesentlichen rotationssymmetrischer Trennkörper sorgt für die Aufspaltung des Gesamtstroms in Kern- und Nebenstrom. Der Trennkörper erstreckt sich über Teile oder die Gesamtheit der Boosterstufen. Am Trennkörper werden die im Kern- und Nebenstrom angeordneten Bauteile mechanisch verbunden. Dabei entstehen innerhalb des Trennkörpers Hohlräume, die aber nach derzeitigem Stand der Technik kaum für eine Führung von Fluidströmen genutzt werden.

Wie in Fig. 2a gezeigt, kann beim Stand der Technik ein radial nach außen gerichtetes Durchströmen des Trennkörpers vom Kernstrom zum Nebenstrom vorgesehen sein, um bei Teillastbetrieb größere Mengen Zapfluft abzublasen. Fig. 2b zeigt eine alternative, weniger verbreitete Ausführung des Niederdruckverdichters, bei der die Aufteilung in Kern- und Nebenstrom nicht vor dem Fan-Rotor, sondern erst direkt vor der ersten Boosterstufe erfolgt.

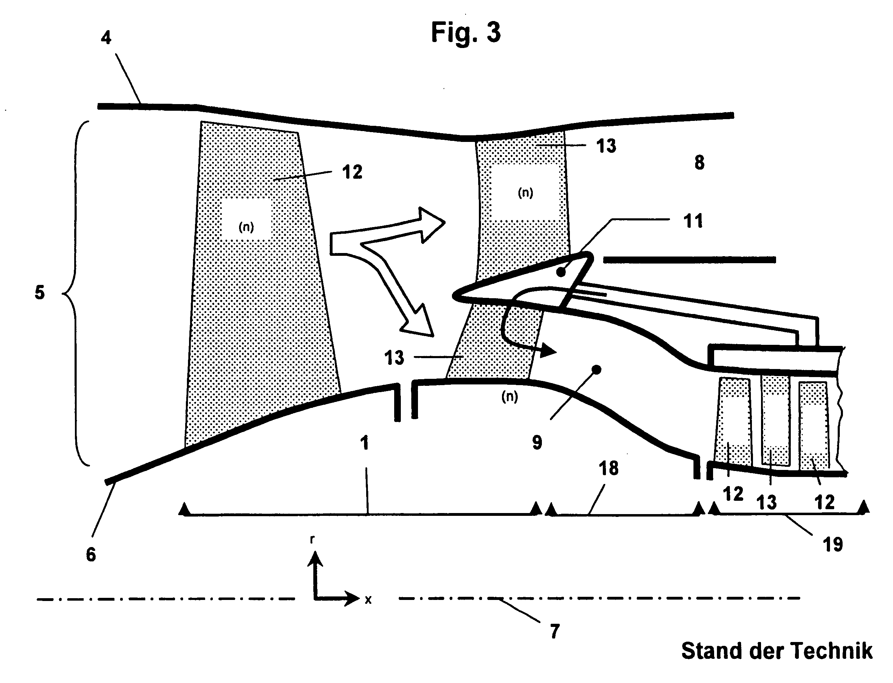

Wie in Fig. 3 dargestellt, wurde nach dem heutigen Stand der Technik in Dreiwellentriebwerken im Bereich des Kernstromstators hinter dem Fan eine im Trennkörper untergebrachte Kammer vorgesehen, die über eine Leitung vom weiter stromab angeordneten Mitteldruckverdichter mit heißer Luft versorgt wird. Die heiße Luft wird dem hohlen Kernstromstator zeitweise zur Enteisung zugeführt. Diese Anordnung ist dadurch gekennzeichnet, dass dem Kernstromstator zunächst keine Verdichterstufe, sondern ein unbeschaufelter gekrümmter Übergangskanal (GÜK) folgt. Erst dann schließt sich der Mitteldruckverdichter (MDV) an, der dabei ein getrenntes, weiter stromab befindliches Baumodul darstellt und eine eigene Welle besitzt. Der Kernstromstator ist hohl ausgeführt und besitzt Öffnungen, durch die die heiße Luft in den Hauptströmungspfad entweichen kann.

Die für Zweiwellentriebwerke typischen Boosterstufen, die vom Trennkörper nach außen gegen den Nebenstrom abgegrenzt werden (siehe Fig. 2a,b), laufen mit dem Fan auf einer gemeinsamen Welle, folglich mit sehr geringer Blattgeschwindigkeit. Die Boosterstufen können deshalb bei heute vorgesehener aerodynamischer Belastbarkeit nur geringe Stufendruckverhältnisse erreichen. Um eine für den Kreisprozess genügend hohe Vorverdichtung zu erzielen, sind nach dem Stand der Technik eine große Anzahl von Boosterstufen notwendig, die einen großen Bauraum einnehmen und so zu einem hohen Gewicht des Triebwerks beitragen.

Eine grundsätzlich für alle Strömungsarbeitsmaschinen in Betracht kommende Methode zur Erhöhung der erzielbaren Stufendruckverhältnisse ist die Verwendung von aktiver Strömungsbeeinflussung durch Fluidzufuhr/-abfuhr an den Oberflächen der Beschaufelung und/oder des Ringraums. Dies erfordert aber normalerweise einen beträchtlichen konstruktiven Zusatzaufwand bei der Gestaltung des Gehäuses, das in diesem Falle zweischalig gestaltet werden muss, um Strömungswege zur Führung der Sekundärfluidmengen aufzunehmen.

Die Bauweise für die im Kernstrom von Strömungsarbeitsmaschinen mit Nebenstromkonfiguration angeordneten Stufen, die hier im Weiteren auch gelegentlich als Boosterstufen (wie beim Zweiwellentriebwerk) bezeichnet werden sollen, orientieren sich nach dem Stand der Technik an niedrigen aerodynamischen Belastungen, da bei Boosterstufen eine nachteilig hohe Stabilitätsmarge für den störungsfreien Betrieb der Maschine erforderlich ist. Die hohe Forderung nach Stabilitätsmarge ist zum Teil dadurch bedingt, dass die Massenstromkapazität der Boosterstufen ohne Änderung der Drehzahl nicht variiert werden kann. Abhilfe wird üblicherweise durch Vorsehung einer großen Zapfluftentnahmestelle und eines dazugehörenden aufwendigen Bedienmechanismus geschaffen.

Zudem wirkt sich die hohe Anzahl der erforderlichen Boosterstufen nachteilig auf die Baulänge und das Gewicht der Gesamtmaschine (z.B. Triebwerk) aus.

Der ohnehin vorhandene Hohlraum im Trennkörper zwischen Kern- und Nebenstrom, der sich einhüllend über die Gesamtheit oder Teile der Boosterstufen erstreckt, wird in dieser einwelligen Anordnung der Strömungsarbeitsmaschine konzeptionell und strömungstechnisch nicht dazu genutzt, Sekundärfluidströme zwischen unterschiedlichen Schaufelreihen der vom Trennkörper ummantelten Stufen zirkulieren zu lassen und auf diese Weise eine aktive Grenzschichtbeeinflussung an der Beschaufelung zu realisieren.

Die GB-A-2406139, die alle Merkmale des Oberbegriffs des Anspruchs 1 beinhaltet, zeigt eine Gasturbine mit einer Grenzschichtbeeinflussung des Verdichters, bei welcher sowohl aus einer Nabenwandung als auch aus einer Gehäusewandung Volumenströme entnommen und an einer stromab und/oder stromauf liegenden Stelle rezirkuliert werden. Der ringförmige Strömungskanal wird dabei nicht unterteilt, die Rezirkulierung erfolgt durch separate Leitungen.

Die EP-A-1382855 zeigt eine Strömungsarbeitsmaschine mit integriertem Fluidzirkulationssystem, wobei ebenfalls keine Aufteilung des ringförmigen Strömungskanals erfolgt, sondern vielmehr die Fluidströme im Bereich der Statorschaufeln und/oder Rotorschaufeln entnommen werden.

Die US-A-2003/0035719 zeigt eine Strömungsarbeitsmaschine mit einem Trennkörper, welcher einen Nebenstromkanal von einem Kernstromkanal unterteilt. Von einem Hochdruckverdichter wird heiße Luft entnommen und zur Enteisung der Anströmlippe des Trennkörpers mittels einer Rohrleitung und einer Verteilerkammer rückgeführt. Ein Teil der Luft kann auch einzelnen Verdichterstufen zugeleitet werden.

Die US-A-4047379 zeigt eine Strömungsarbeitsmaschine, bei welcher ein hohler Trennkörper, der einen ringförmigen Nebenstromkanal und einen ringförmigen Kernstromkanal unterteilt, von einer Rohrleitung durchquert wird, aus welcher Luft zu einer Verdichterstufe eingeleitet wird.

Der vorliegenden Erfindung liegt die Aufgabe zugrunde, eine Strömungsarbeitsmaschine der eingangs genannten Art zu schaffen, welche unter Vermeidung der Nachteile des Standes der Technik eine Nutzung des Trennkörpers für eine strömungsarbeitsmaschinenintern angelegte Sekundärfluidführung vorsieht.

Erfindungsgemäß wird die Aufgabe durch die Merkmalkombination des Hauptanspruchs gelöst, die Unteransprüche zeigen weitere vorteilhafte Ausgestaltungen der Erfindung.

Erfindungsgemäß ist somit vorgesehen, dass der Trennkörper als Zwischengehäuse für mindestens eine unmittelbar stromab des ersten Kernstromstators angeordnete Stufe der Strömungsarbeitsmaschine vorgesehen ist und im Bereich dieser vom Trennkörper ummantelten Kernstromstufen (Boosterstufen) Strömungswege und/oder Kammern im Innern des Trennkörpers geschaffen sind, die eine Sekundärfluidführung zwischen Orten am Hauptströmungspfad innerhalb des beschaufelten Raums unterschiedlicher Schaufelreihen des Kernstroms und/oder Nebenstroms erlauben. Der Trennkörper kann dabei zusätzlich mindestens ein schaltbares Ventil zur Regelung oder zur zeitweisen Unterbindung eines oder mehrerer Sekundärfluidströme beherbergen.

Auf diese Weise wird erfindungsgemäß eine einfache und wirksame Beeinflussung der Grenzschichten innerhalb des beschaufelten Raumes mindestens einer Schaufelreihe erlaubt, mit der Wirkung, dass eine höhere aerodynamische Belastbarkeit und eine kompaktere Bauweise der Stufen im Kernstrom möglich ist, und mit der Wirkung, dass insbesondere bei Beeinflussung der Schaufelabströmrichtung eine Regelung der Sekundärfluidströme über ein schaltbares Ventil die Variierbarkeit der Massenstromkapazität der betroffenen Stufen erlaubt.

Im Folgenden wird die Erfindung anhand von Ausführungsbeispielen in Verbindung mit den Figuren 1 bis 4 beschrieben. Dabei zeigt:
- Fig. 1: ein Beispiel für eine Strömungsarbeitsmaschine mit Nebenstromkonfiguration (Niederdruckverdichter eines Flugtriebwerks mittlerer Schubklasse),
- Fig. 2a: ein Beispiel einer Strömungsarbeitsmaschine nach dem Stand der Technik, Niederdruckverdichter eines Zwei- wellentriebwerks, Fan mit Booster,

- Fig. 2b: ein weiteres Beispiel einer Strömungsarbeitsmaschine nach dem Stand der Technik, Niederdruckverdichter ei- nes Zweiwellentriebwerks, Fan mit Booster,
- Fig. 3: ein Beispiel einer Strömungsarbeitsmaschine nach dem Stand der Technik, Niederdruckverdichter eines Drei- wellentriebwerks, Fan (ohne Booster),
- Fig. 4a: eine erfindungsgemäße Verwendung des Trennkörpers zur Fluidführung,
- Fig. 4b: eine weitere erfindungsgemäße Verwendung des Trenn- körpers zur Fluidführung,
- Fig.: 4c eine weitere erfindungsgemäße Verwendung des Trenn- körpers zur Fluidführung,
- Fig. 4d: eine weitere erfindungsgemäße Verwendung des Trenn- körpers zur Fluidführung,
- Fig. 4e: eine weitere erfindungsgemäße Verwendung des Trenn- körpers zur Fluidführung.

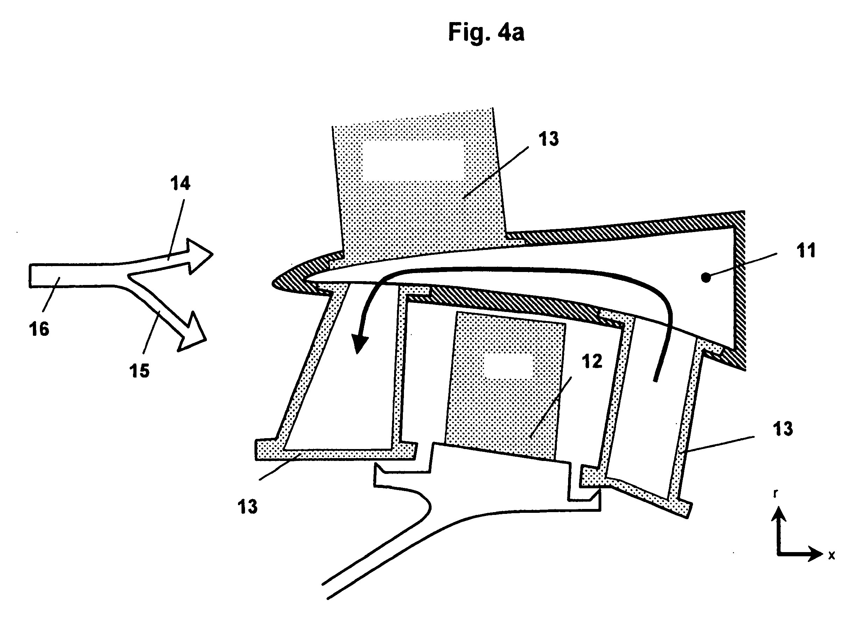

Die Fig. 4a zeigt den Teil einer Strömungsarbeitsmaschine mit Nebenstromkonfiguration im Meridianschnitt, hier skizziert als eine Anordnung aus dem ersten Kernstromstator und einer stromab direkt dahinter angeordneten Kernstromstufe, bestehend aus Rotor und Stator. Das Bild zeigt beispielhaft eine erfindungsgemäße Ausführung der Strömungsarbeitmaschine und des zugehörigen, die Kernstromstufen ummantelnden Trennkörpers. Erfindungsgemäß ist der Trennkörper so ausgeführt, dass in seinem Inneren Strömungswege vorgesehen sind, durch die Fluid, das beispielsweise durch Öffnungen in der Oberfläche des letzten Stators aus dem Hauptströmungspfad entnommen wird, auf kontrollierte Weise zum ersten Kernstromstator gelangt und dort dem Hauptströmungspfad wieder zugeführt wird. Der übersichtlicheren Darstellung wegen ist hier nur eine einzige Kernstromstufe dargestellt. Die Erfindung bezieht sich jedoch ebenso auf Mehrstufenanordnungen. Der erfinderische Gedanke ist nicht festgemacht an der exakten Art und dem exakten Ort der Fluidentnahme/Fluidzufuhr am Hauptströmungspfad, sondern an der Eigenschaft der Strömungsarbeitsmaschine, das der Trennkörper der Rezirkulation kleiner Sekundärfluidmengen dient und die damit verbundene Fluidentnahme und Fluidzufuhr innerhalb oder unmittelbar stromauf des beschaufelten Raumes (gebildet durch die Zone zwischen Vorder- und Hinterkantenebene) der betreffenden Schaufelreihen vorgesehen ist.

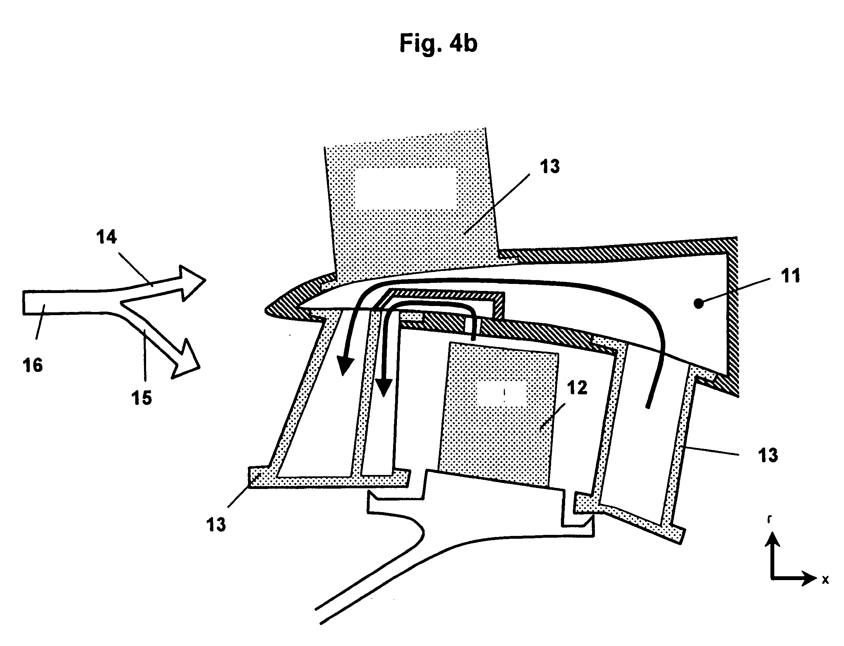

Die Fig. 4b zeigt eine weitere erfindungsgemäße Konfiguration der Strömungsarbeitsmaschine und des die Kernstromstufen ummantelnden Trennkörpers. Der Trennkörper ist in dem gezeigten Beispielfall in mehrere Kammern unterteilt, von denen die eine, wie in Fig. 4a, eine Rezirkulation vom hinteren zum vorderen Kernstromstator ermöglicht und die andere zusätzlich einer Fluidrückführung von der Radialspaltzone des Rotors zum Hinterkantenbereich des vorderen Kernstromstators dient. Nach diesem Prinzip können auch, ohne dass dies zu einem neuen erfinderischen Gedanken führen würde, anders beschaffene Unterteilungen des Trennkörperinnenraumes vorgesehen sein.

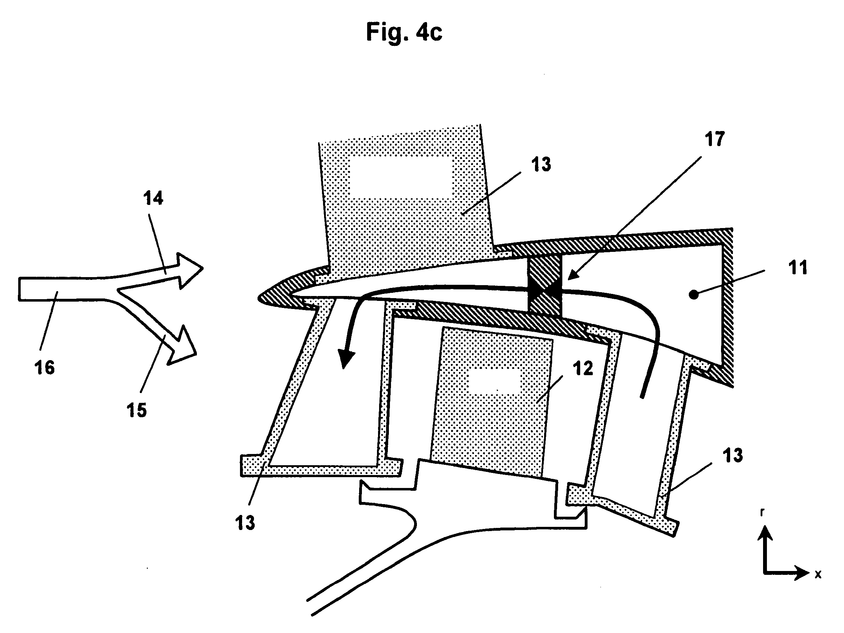

Die Fig. 4c zeigt eine weitere erfindungsgemäße Konfiguration der Strömungsarbeitsmaschine und des die Kernstromstufen ummantelnden Trennkörpers. Der Trennkörper ist in dem gezeigten Beispielfall in zwei Kammern unterteilt, die zusätzlich zu der in Fig. 4a dargestellten Lösung durch ein Drosselorgan oder ein regelbares Ventil verbunden sind. Das Drosselorgan/Ventil ist ebenfalls innerhalb des Trennkörpers untergebracht und kann den Sekundärfluidstrom zeitweise unterbinden und so das Betriebsverhalten der Kernstromstufe ändern. Bei Vorliegen einer Mehrstufenanordnung im Kernstrom sind erfindungsgemäß prinzipiell auch mehrere Drosselorgane/Ventile vorsehbar.

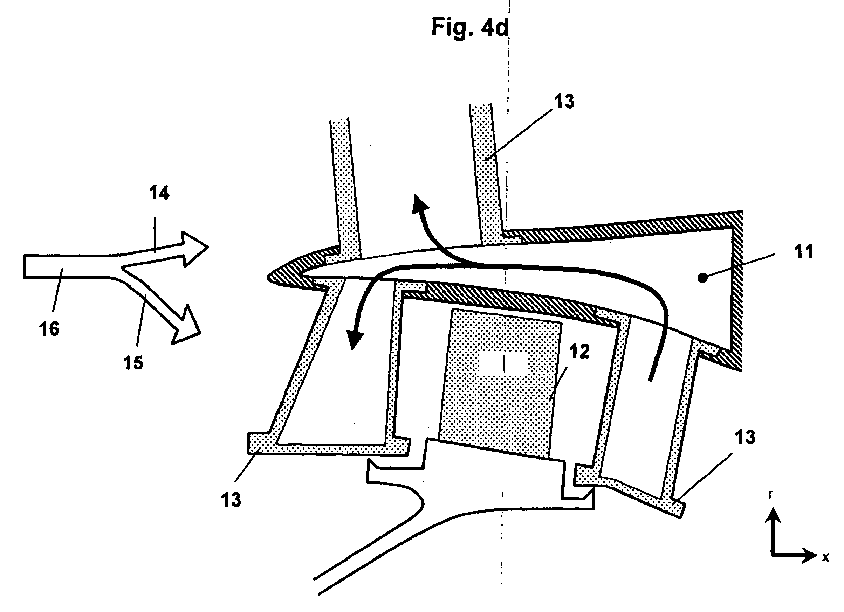

Die Fig. 4d zeigt eine weitere erfindungsgemäße Konfiguration der Strömungsarbeitsmaschine und des die Kernstromstufen ummantelnden Trennkörpers. Der Trennkörper besitzt in diesem Beispielfall, wie schon in Fig. 4a dargestellt, nur eine einzige Kammer, führt aber in diesem erfindungsgemäßen Beispiel zusätzlich dem Stator im Nebenstrom Sekundärfluid zu.

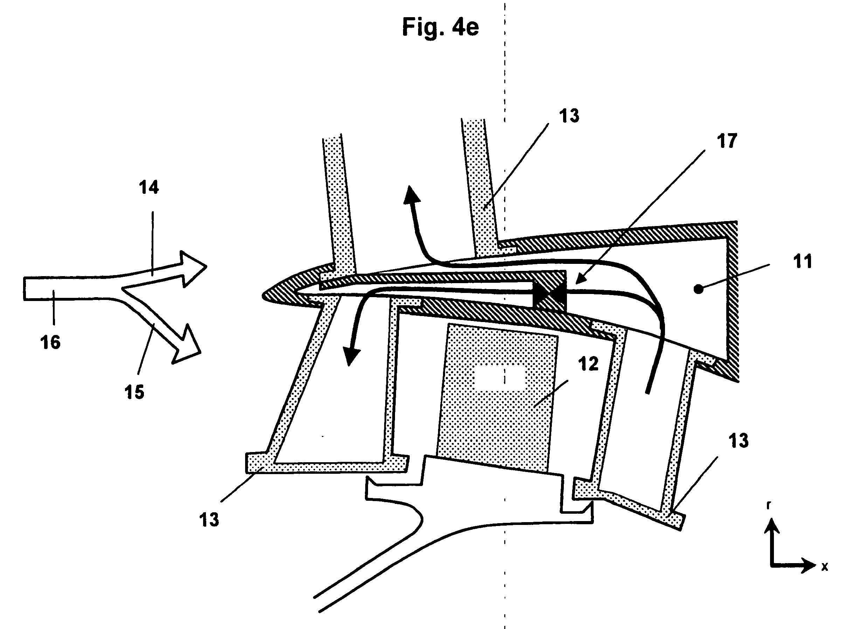

Die Fig. 4e zeigt eine weitere erfindungsgemäße Konfiguration der Strömungsarbeitsmaschine und des die Kernstromstufen ummantelnden Trennkörpers. Der Trennkörper ist in dem gezeigten Beispielfall in zwei Kammern unterteilt, die zusätzlich zu der in Fig. 4d dargestellten Lösung durch ein Drosselorgan oder ein regelbares Ventil verbunden sind. Das Drosselorgan/Ventil regelt in diesem gezeigten Fall den Sekundärfluidstrom zum ersten Kernstromstator, kann aber erfindungsgemäß auch an anderer Stelle zur Regelung anderer Sekundärfluidströme im Trennkörper angeordnet sein.

Die in vorliegender Erfindung spezifizierte Fluidrückführung im Trennkörper von Strömungsarbeitsmaschinen mit Nebenstromkonfiguration ermöglicht durch einfache Maßnahmen ein zusätzliches Maß an Leistungskonzentration und Kompaktbauweise in Strömungsarbeitsmaschinen. Insbesondere bei zwingend langsam laufenden Maschinen wie beispielsweise den vom Trennkörper ummantelten Boosterstufen eines Flugtriebwerkes wird eine Erhöhung der Belastbarkeit um den Faktor 2 ermöglicht. Für ein gegebenes Druckverhältnis der Boosterstufen lässt sich unter Beibehaltung oder Verbesserung des Wirkungsgrades von bis zu 2% die Anzahl der verbauten Teile um mindestens 30% gegenüber konventionell gebauten Boostern senken. Die Kosten und das Gewicht des Triebwerks sinken um etwa 5%. Bei Einsatz des Konzeptes im Verdichter eines Flugtriebwerks mit rund 25000 Pfund Schub ergibt sich unmittelbar eine Reduzierung des spezifischen Kraftstoffverbrauches von bis zu 0,5%. Weiteres Potential liegt in der reduzierten Triebwerkslänge und der daraus resultierenden möglichen Verringerung der Laufspalte im Kerntriebwerkssektor (Hochdruckverdichter).

### Bezugszeichenliste

- 1: Fan (1 Stufe)
- 2: Booster (3 Stufen)
- 3: Hochdruckverdichter (10 Stufen)
- 4: Gehäuse
- 5: Ringkanal
- 6: Rotortrommel (Nabe)
- 7 .: Maschinenachse
- 8: Nebenstromkanal
- 9: Kernstromkanal
- 10: Abblaskanal
- 11: Trennkörper
- 12: Rotor
- 13: Stator
- 14: Nebenstrom
- 15: Kernstrom
- 16: Gesamtstrom
- 17: Schaltbares Ventil/Drosselorgan
- 18: Gekrümmter Übergangskanal
- 19: Mitteldruckverdichter

## Patentansprüche

1. Strömungsarbeitsmaschine mit einem ringförmigen HauptStrömungskanal, welcher in Strömungsrichtung nach zumindest einer Schaufelreihe einer Fanstufe mittels eines konzentrisch angeordneten Trennkörpers (11) in einen äußeren, ringförmigen Nebenstromkanal (8) und einen inneren, ringförmigen Kernstromkanal (9) geteilt ist, wobei der Trennkörper (11) als Zwischengehäuse mit zumindest einem Innenvolumen ausgebildet ist, durch welchen eine Fluidrückführung zwischen Kernstromverdichterstufen des Kernstromkanals (9) erfolgt, **dadurch gekennzeichnet, dass** durch das zumindest eine Innenvolumen des Trennkörpers (11) eine Sekundärfluidführung zwischen Orten am Hauptströmungspfad innerhalb des beschaufelten Raums unterschiedlicher Schaufelreihen des Nebenstroms (14) und/oder hinzu oder weg von Orten am Hauptströmungspfad innerhalb des beschaufelten Raumes von mindestens einer Schaufelreihe des Nebenstroms (14) ermöglicht ist.

2. Strömungsarbeitsmaschine nach Anspruch 1, **dadurch gekennzeichnet, dass** das Innenvolumen in Form zumindest eines Strömungsweges ausgebildet ist.

3. Strömungsarbeitsmaschine nach Anspruch 1, **dadurch gekennzeichnet, dass** das Innenvolumen in Form zumindest einer Kammer ausgebildet ist.

4. Strömungsarbeitsmaschine nach einem der Ansprüche 1 bis 3, **dadurch gekennzeichnet, dass** durch das zumindest eine Innenvolumen des Trennkörpers (11) eine Sekundärfluidführung zwischen Orten am Hauptströmungspfad innerhalb des beschaufelten Raums unterschiedlicher Schaufelreihen des Kernstroms (15) ermöglicht ist.

5. Strömungsarbeitsmaschine nach einem der Ansprüche 1 bis 4, **dadurch gekennzeichnet, dass** in dem zumindest einen Innenvolumen des Trennkörpers (11) zumindest ein schaltbares Ventil (17) und/oder Absperrelement vorgesehen ist.

6. Strömungsarbeitsmaschine nach einem der Ansprüche 1 bis 4, **dadurch gekennzeichnet, dass** in dem zumindest einen Innenvolumen des Trennkörpers (11) zumindest ein schaltbares Drosselorgan (17) angeordnet ist.

7. Strömungsarbeitsmaschine nach einem der Ansprüche 1 bis 6, **dadurch gekennzeichnet, dass** die mehreren Innenvolumen und die hierdurch gebildeten Strömungswege und/oder Kammern wahlweise miteinander kommunizierend ausgebildet sind.

8. Strömungsarbeitsmaschine nach einem der Ansprüche 1 bis 7, **dadurch gekennzeichnet, dass** mittels der mehreren Innenvolumen eine Fluidrückführung aus dem Kernstromkanal (9) an zumindest eine Stelle stromauf des Kernstromkanals (9) und/oder zumindest eine Stelle im Nebenstromkanal (8) geschaffen wird.

## Claims

1. Fluid-flow machine featuring an annular main flow duct, which in flow direction downstream of at least one blade row of a fan stage is divided into an outer annular bypass duct (8) and an inner annular core-flow duct (9) by means of a concentrically arranged splitter (11), with the splitter (11) being designed as an intermediate casing with at least one inner volume, through which fluid is returned between core-flow compressor stages of the core-flow duct (9), **characterized in that** by means of the at least one inner volume of the splitter (11), a secondary fluid conduction is made possible between locations on the main flow path within the bladed space of different blade rows of the bypass flow (14) and/or to or from locations on the main flow path within the bladed space of at least one blade row of the bypass flow (14).

2. Fluid-flow machine in accordance with Claim 1, **characterized in that** the inner volume is designed in the form of at least one flow path.

3. Fluid-flow machine in accordance with Claim 1, **characterized in that** the inner volume is designed in the form of at least one chamber.

4. Fluid-flow machine in accordance with one of the Claims 1 to 3, **characterized in that** by means of the at least one inner volume of the splitter (11), a secondary fluid conduction is made possible between locations on the main flow path within the bladed space of different blade rows of the core flow (15).

5. Fluid-flow machine in accordance with one of the Claims 1 to 4, **characterized in that** in the at least one inner volume of the splitter (11) at least one switchable valve (17) and/or shut-off element is provided.

6. Fluid-flow machine in accordance with one of the Claims 1 to 4, **characterized in that** in the at least one inner volume of the splitter (11) at least one switchable throttling element (17) is provided.

7. Fluid-flow machine in accordance with one of the Claims 1 to 6, **characterized in that** the multiple inner volumes and the flow paths and/or chambers formed by them, are designed such that they communicate optionally with one another.

8. Fluid-flow machine in accordance with one of the Claims 1 to 7, **characterized in that** by means of the multiple inner volumes a fluid return from the core-flow duct (9) to at least one location upstream of the core-flow duct (9) and/or to at least one location in the bypass-flow duct (8) is made possible.

## Revendications

1. Turbomachine avec un canal d'écoulement principal annulaire qui, dans le sens d'écoulement en aval d'au moins une rangée d'aubes d'un étage de soufflante, est divisé au moyen d'un élément séparateur (11) concentrique en un canal de flux secondaire (8) extérieur annulaire et en un canal de flux central (9) intérieur annulaire, l'élément séparateur (11) étant conçu comme carter intermédiaire avec au moins un volume intérieur à travers lequel s'effectue un retour de fluide entre des étages de compression du flux central du canal de flux central (9), **caractérisée en ce qu'**à travers l'au moins un volume intérieur de l'élément séparateur (11) est rendu possible un guidage du fluide secondaire entre des points sur la voie d'écoulement principale à l'intérieur de l'espace aubagé de différentes rangées d'aubes du flux secondaire (14) et/ou vers des ou en direction opposée de points sur la voie d'écoulement principale à l'intérieur de l'espace aubagé d'au moins une rangée d'aubes du flux secondaire (14).

2. Turbomachine selon la revendication n° 1, **caractérisée en ce que** le volume intérieur est conçu sous la forme d'au moins une voie d'écoulement.

3. Turbomachine selon la revendication n° 1, **caractérisée en ce que** le volume intérieur est conçu sous la forme d'au moins une chambre.

4. Turbomachine selon une des revendications n° 1 à n° 3, **caractérisée en ce qu'**à travers l'au moins un volume intérieur de l'élément séparateur (11) est rendu possible un guidage de fluide secondaire entre des points sur la voie d'écoulement principale à l'intérieur de l'espace aubagé de différentes rangées d'aubes du flux central (15).

5. Turbomachine selon une des revendications n° 1 à n° 4, **caractérisée en ce que** dans l'au moins un volume intérieur de l'élément séparateur (11) est prévu(e) au moins une vanne (17) et/ou un élément d'arrêt commutable.

6. Turbomachine selon une des revendications n° 1 à n° 4, **caractérisée en ce que** dans l'au moins un volume intérieur de l'élément séparateur (11) est prévu au moins un élément d'étranglement commutable.

7. Turbomachine selon une des revendications n° 1 à n° 6, **caractérisée en ce que** les plusieurs volumes intérieurs et les voies d'écoulement et/ou chambres formées par eux sont conçus de manière à communiquer entre eux à volonté.

8. Turbomachine selon une des revendications n° 1 à n° 7, **caractérisée en ce qu'**au moyen des plusieurs volumes intérieurs est assuré un retour de fluide depuis le canal de flux central (9) à au moins un endroit en amont du canal de flux central (9) et/ou à au moins un endroit dans le canal de flux secondaire (8).
